# EUROPÄISCHE PATENTSCHRIFT

(11) **EP 3 364 381 B1**
(45) Veröffentlichungstag und Bekanntmachung des Hinweises auf die Patenterteilung: **20.04.2022**
(21) Anmeldenummer: 18000183.6
(22) Anmeldetag: 20.02.2018
(51) Int. Cl.: G07F 9/02, G06Q 10/08

(54) **WARENAUTOMAT MIT BESTANDSFÜHRUNGSMITTEL**
GOODS VENDING MACHINE WITH INVENTORY MAINTENANCE MEANS
DISTRIBUTEUR AUTOMATIQUE DE MARCHANDISES POURVU D'UN MOYEN DE GESTION DE STOCK

(30) Priorität: 21.02.2017 DE 102017103505; 01.09.2017 DE 102017120179
(43) Veröffentlichungstag der Anmeldung: 22.08.2018
(73) Patentinhaber: Harting Systems GmbH, 32339 Espelkamp (DE)
(72) Erfinder: Netzel, Nikolaus, 32479 Hille (DE); Lübbert, Jan Patrick, 32361 Preußisch Oldendorf (DE); Rabe, Florian, 32278 Kirchlengern (DE); Riechmann, Till, 32351 Sternwede (DE); Loske, Felix, 49504 Lotte (DE)
(74) Vertreter: Ridderbusch, Oliver

(56) Entgegenhaltungen:
- EP-A2- 2 362 330
- US-A1- 2007 189 597
- US-A1- 2012 314 059
- US-A1- 2013 151 006

## Beschreibung

Die Erfindung betrifft einen Warenautomaten, der für den Abverkauf verschiedener Waren eingesetzt werden kann und ein Verfahren zum Betreiben eines derartigen Warenautomaten, sowie ein Verfahren zur Produktbestandsermittlung und insbesondere ein optisches Verfahren zur Produktbestandsermittlung.

Derartige Warenautomaten werden zur Ausgabe von Waren, vornehmlich in der Nähe einer Kassenzone, eingesetzt.

### Stand der Technik

Die DE 10 2012 102 942 A1 zeigt einen Warenautomaten, der mehrere Warenschächte aufweist, die jeweils über einen eigenen Leerstandssensor verfügen. Wenn die Ware in einem Warenschacht zur Neige geht, wird rechtzeitig ein Signal ausgegeben, so dass noch vor einem drohenden Leerstand der betreffende Warenschacht wieder aufgefüllt werden kann.

Die Anzahl der benötigten Sensoren muss der Anzahl der Warenschächte des Warenautomaten entsprechen. Außerdem müssen die einzelnen Warenschächte immer mit denselben Sorten von Waren befüllt sein, damit eine Steuereinheit die Leerstandinformation mit einer bestimmten Ware verknüpfen kann.

Aus der DE 10 2012 102 942 ein Warenautomat bekannt, der mehrere Warenschächte aufweist, die jeweils über einen eigenen Leerstandssensor verfügen. Wenn die Ware in einem Warenschacht zur Neige geht, wird rechtzeitig ein Signal ausgegeben, so dass noch vor einem drohenden Leerstand der betreffende Warenschacht wieder aufgefüllt werden kann. Der Warenautomat benötigt dafür jedoch für jeden einzelnen Warenschacht einen eigenen Sensor, was entsprechend kostspielig ist. Außerdem müssen die einzelnen Warenschächte immer mit denselben Sorten von Waren befüllt sein, damit eine Steuereinheit die Leerstandsinformation mit einer bestimmten Ware verknüpfen kann, was einen flexiblen Betrieb des Warenautomaten erheblich einschränkt.

Aus der US 2013/0151006 A1 ist ein Warenautomat bekannt, bei dem Bilddaten einer auszugebenden Ware an ihrer Ausgabelokation erfasst und Bilddaten aus einer Datenbank zugeordnet werden. Diese Information wird an eine von dem Warenautomaten entfernte Basisstation gesendet, die diese Information weiter verarbeitet, wonach Informationen über den Warenbestand lediglich an der Basisstation zur Verfügung stehen. Bei Leerstand wird an dem Warenautomat ein Bild einer leeren Ausgabelokation erfasst und ein entsprechender Leerstand detektiert. Eine Warenspeichereinheit des Warenautomatens wird daher anders als bei der vorstehenden DE 10 2012 102 942 A1 nachteilhaft erst nach einem detektierten Leerstand wieder aufgefüllt.

### Aufgabenstellung

Die Aufgabe der Erfindung besteht darin einen kostengünstigen Warenautomaten vorzuschlagen, der für den Abverkauf verschiedener Waren eingesetzt werden kann, sowie ein Verfahren zum Betreiben eines derartigen Warenautomatens anzugeben. Die Aufgabe der vorliegenden Erfindung ist dabei außerdem ein kostengünstiges, flexibel einsetzbares und dennoch zuverlässiges Verfahren zur Produktbestandsermittlung anzugeben

Die Aufgabe wird durch den Gegenstand des unabhängigen Anspruchs 1 gelöst.

Vorteilhafte Ausgestaltungen der Erfindung sind in den Unteransprüchen angegeben.

Der erfindungsgemäße Warenautomat weist zumindest eine Warenspeichereinheit auf, in welcher eine Vielzahl gleichartiger oder unterschiedlicher Waren gespeichert sein kann.

Bei der Warenspeichereinheit handelt es sich um Spindelstangen, auf denen jeweils eine Vielzahl von einzelnen Waren aufgehängt sind. Bei den Waren handelt es sich beispielsweise um Rasierklingen. Auf den einzelnen Spindelstangen können jeweils unterschiedliche Sorten von Rasierklingen hängen. Die Spindelstangen können aber auch sortenrein ausgeführt sein. In diesem Fall würde sich auf jeder Spindelstange nur eine Sorte von Rasierklingen befinden.

Neben der Warenspeichereinheit weist der Warenautomat eine Steuereinheit auf. Die Steuereinheit kann die gesamten Verkaufsabläufe des Warenautomaten steuern. Die Steuereinheit ist in der Lage mit der geeigneten Software weitere Auswertungen und Berechnungen durchzuführen. Die Steuereinheit umfasst einen Speicher bzw. einen Speicherbaustein, auf welchem unterschiedliche Informationen gespeichert werden können.

Der Warenautomat weist einen optischen Sensor auf, mit dem Bilddaten erfasst werden. Diese Bilddaten beinhalten Helligkeitsunterschiede eines aufgenommenen Bilds bzw. eines aufgenommenen Bereichs. Aus den Bilddaten wird von der Steuereinheit eine Helligkeitskurve mit Helligkeitsminima und Helligkeitsmaxima errechnet. Die Steuereinheit ermittelt aus der Anzahl der Helligkeitsminima die Anzahl der Waren, die sich in der Warenspeichereinheit befinden. Die Bilddaten des optischen Sensors beinhalten auch Freiräume zwischen den einzelnen Waren

Vorteilhafterweise handelt es sich beim optischen Sensor um eine Kamera. Kameras können günstig erworben und auch bei bestehenden Warenautomaten nachgerüstet werden. Die Kamera kann verfahrbar im Warenautomaten angeordnet sein. Je nachdem welchen Bildausschnitt die Kamera erfassen kann, kann es sinnvoll sein die Kamera an Positionen fahren zu lassen um weitere Bildausschnitte zu erfassen, um beispielsweise ein Gesamtbild eines Warenlagerbereichs zu erlangen. Dadurch kann vermieden werden, dass mehrere Kameras eingebaut werden müssen.

Der optische Sensor zeichnet Bilddaten der zumindest einen Warenspeichereinheit und der darin befindlichen Waren auf. Aus den Bilddaten des optischen Sensors ermittelt die Steuereinheit mithilfe einer geeigneten Softwareroutine die Anzahl der Waren, die sich in der zumindest einen Warenspeichereinheit befinden.

Der Warenautomat kann einen nicht beanspruchten Komparator aufweisen. Mithilfe des Komparators können vom optischen Sensor erfasste Bilddaten mit im Speicherbaustein gespeicherten Referenzbildern verglichen werden.

Bei der Auswertung der Bilddaten des optischen Sensors werden Helligkeitsunterschiede ausgewertet. Dadurch können freie Stellen vor und zwischen zwei nebeneinander angeordneten Waren detektiert werden. Dadurch kann die Anzahl der in einer Warenspeichereinheit befindlichen Waren detektiert werden.

Der Warenautomat kann mehrere Warenspeichereinheiten aufweisen. In diesem Fall ermittelt die Steuereinheit aus den Bilddaten des optischen Sensors die Anzahl der Warenspeichereinheiten und gleichzeitig die Anzahl der jeweils darin befindlichen Waren. Auch bei den Warenspeichereinheiten werden hierfür die Helligkeitsunterschiede zwischen den Warenspeichereinheiten ausgenutzt.

Auf der Steuereinheit kann zumindest ein Referenzbild zumindest einer Ware gespeichert sein. Die Steuereinheit kann anhand dieses zumindest einen Referenzbildes und der Bilddaten des optischen Sensors die Anzahl der in zumindest einer Warenspeichereinheit gespeicherten Waren ermitteln. Durch das Referenzbild einer Ware kann speziell diese Ware sehr zuverlässig durch Bildvergleiche von dem optischen Sensor detektiert werden. In diesem Fall kann die Anzahl der Waren genau dieser Sorte in der Warenspeichereinheit ermittelt werden. Weiterhin kann durch ein Ausschlussprinzip die Anzahl der Waren ermittelt werden, die genau nicht diese Sorte betrifft.

Auf der Steuereinheit können mehrere Referenzbilder unterschiedlicher Waren gespeichert sein. Die Steuereinheit kann anhand dieser Referenzbilder und der Bilddaten des optischen Sensors die Anzahl der unterschiedlichen Waren in zumindest einer Warenspeichereinheit ermitteln. So kann erfasst werden welche Sorten von Waren in welcher Anzahl in einer Warenspeichereinheit gespeichert sind.

Auf der Steuereinheit können mehrere Referenzbilder unterschiedlicher Waren und zumindest ein Referenzbild einer Warenspeichereinheit gespeichert sein. Die Steuereinheit kann anhand dieser Referenzbilder und der Bilddaten des optischen Sensors die Anzahl der Warenspeichereinheiten und die Anzahl der darin befindlichen Waren ermitteln. Diese Lösung empfiehlt sich, wenn der Warenautomat mehrere Warenspeichereinheiten aufweist, die in etwa baugleich ausgeführt sind.

Auf der Steuereinheit können mehrere Referenzbilder unterschiedlicher Waren und mehrere Referenzbilder unterschiedlicher Warenspeichereinheiten gespeichert sein. Die Steuereinheit kann anhand dieser Referenzbilder und der Bilddaten des optischen Sensors die Anzahl der Warenspeichereinheiten und die Anzahl der darin befindlichen Waren ermitteln. Diese Lösung ist besonders interessant, wenn der Warenautomat unterschiedliche Warenspeichereinheiten aufweist. Diese Variante kann auch als Nachrüstlösung vom Hersteller zur Verfügung gestellt werden. Wenn alle unterschiedlichen Warenspeichereinheits-Referenzbilder gespeichert sind, kann ein und dieselbe Hardware mit dem entsprechenden Speicherbaustein bei verschiedenen Warenautomaten nachgerüstet werden.

Der Warenautomat kann einen nicht beanspruchten Komparator zum Vergleich von Referenzbildern mit den Bilddaten aufweisen. Der Komparator kann als separates Bauteil oder als Softwareroutine ausgeführt sein.

Die Begriffe Produkte und Waren werden bei der vorliegenden Patentanmeldung synonym verwendet.

Die vorliegende Erfindung betrifft wie beansprucht ein erfindungsgemäßes Verfahren zur Produktbestandsermittlung einer Vielzahl von Produkten und/oder einer Produktmenge zumindest einer Produktaufnahmevorrichtung unter Verwendung zumindest einer Lichtquelle, die UV-Licht eines vorbestimmten ersten Wellenlängenbereichs ausstrahlt, wobei die Produktaufnahmevorrichtung eine Schicht mit fluoreszierenden Eigenschaften umfasst, die Licht mit einer vorbestimmten zweiten Wellenlänge innerhalb eines vorbestimmten zweiten Wellenlängenbereichs emittiert, und unter Verwendung zumindest eines mit einer Filtereinrichtung ausgestatteten optischen Sensors, mittels dem ausschließlich Licht des vorbestimmten zweiten Wellenlängenbereichs erfasst wird, wobei der optische Sensor Bilddaten der zumindest einen Produktaufnahmevorrichtung und ihrer Produkte und/oder ihrer Produktmenge aufzeichnet.

Bei der Lichtquelle handelt es sich vorzugsweise um eine schmalbandige Lichtquelle, beispielsweise ein Laser oder eine LED-Lampe. Bei dem optischen Sensor handelt es sich vorteilhafterweise um einen Liniendetektor.

Mittels außerdem der Verwendung einer Steuereinheit kann dabei aus den Bilddaten des optischen Sensors der Produktbestand der zumindest einen Produktaufnahmevorrichtung besonders einfach, zuverlässig und kostengünstig ermittelt werden.

Das ist insbesondere deshalb der Fall, weil ein auf der Schicht mit fluoreszierenden Eigenschaften angeordnetes Produkt von einem geeigneten optischen Sensor besonders zuverlässig erkannt werden kann. Zwischen dem jeweils von dem Produkt reflektiertem Licht und von der fluoreszierenden Schicht emittiertem Licht tritt nämlich ein wünschenswert hoher Kontrast auf.

Hierbei kann die Steuereinheit aus den Bilddaten des optischen Sensors auf besonders einfache und zuverlässige Weise Helligkeitskurven ermitteln, die einen Pulsverlauf mit vorteilhaft digitalem Charakter aufweisen. Aus diesem Grund lassen sich hieran anschließend aus den ermittelten Helligkeitskurven ebenfalls besonders einfach und somit kostengünstig und außerdem besonders zuverlässig über eine Analyse deren Maxima und Minima mittels einer Softwareroutine eine Bestandsermittlung der Produkte und/oder einer Produktmenge und damit insbesondere auch eine Produktzählung durchführen.

Der optische Sensor kann dabei geeigneter Weise eine Kamera sein, die mit einer geeigneten Filtereinrichtung ausgestattet ist. Kameras können günstig erworben und auf einfache Weise nachgerüstet werden. Eine geeignete Filtereinrichtung kann ebenfalls zuverlässig und kostengünstig mittels einer Softwareroutine bereitgestellt werden. Besonders vorteilhaft ist hierbei, wenn auf einfache Weise ein Wellenlängenbereich kleiner als der vorbestimmte von dem Sensor erfasste zweite Wellenlängenbereich ausgeblendet wird.

Hierbei ist besonders vorteilhaft, wenn der von dem Sensor erfasste zweite vorbestimmte Wellenlängenbereich Licht mit einer Wellenlänge von größer als 600nm umfasst, nachdem nicht nur UV-Licht, sondern auch Licht im sichtbaren Bereich ausgeblendet wird und ein möglichst großer Abstand zwischen dem von dem Sensor erfassten Licht und dem von der Lichtquelle ausgestrahltem Licht vorhanden ist. Hierdurch werden insbesondere auch unerwünschte Störungen minimiert.

Die Schicht mit fluoreszierenden Eigenschaften kann nämlich auch Schwankungen in ihrer Mächtigkeit und/oder ihrer Materialbestandteile und damit ihrer optischen Eigenschaften aufweisen, wonach ein vollständiges Ausblenden von Licht mit einer Wellenlänge kleiner 600nm und dabei vollständigem Erfassen von Licht mit einer Wellenlänge größer 600nm zur Minimierung diesbezüglicher möglicher Störeffekte besonders vorteilhaft ist. In diesem Zusammenhang ist klar, dass für ein Material der Schicht mit fluoreszierenden Eigenschaften ein geeignetes fluoreszierendes Material ausgewählt wird.

Ein besonders starker vorstehender Kontrast lässt sich dabei erzielen, wenn mittels der Lichtquelle im wesentlichen Licht einer vorbestimmten diskreten ersten Wellenlänge des ersten Wellenlängenbereichs im UV-Spektralbereich ausgestrahlt wird, wobei die vorbestimmte erste Wellenlänge insbesondere zwischen 350nm und 400nm liegt und insbesondere etwa bei 375nm liegt. Außerdem ist eine ausgestrahlte erste Wellenlänge dieses Bereichs von dem vorstehenden erfassten zweiten Wellenlängenbereich wünschenswert weit beabstandet.

Ein vorstehendes erfindungsgemäßes Verfahren zur Produktbestandsermittlung lässt sich wie vorstehend gesagt außerdem auch auf einfache und zuverlässige Weise als Verfahren zur Produktzählung einsetzen.

Geeigneter Weise kann die Schicht mit fluoreszierenden Eigenschaften auf einer Oberfläche der Produktaufnahmevorrichtung zur Aufnahme der Vielzahl von Produkten und/oder der Produktmenge ausgebildet sein. Hierdurch wird die Möglichkeit geschaffen, Produktaufnahmevorrichtungen beispielsweise mittels einer geeigneten Lackierung mit jeweils individuellen an sie angepassten Schichten zu versehen, so dass deren Funktionsumfang nicht behindert wird. Außerdem lassen sich auf diese Weise Produktaufnahmevorrichtungen kostengünstig nachrüsten.

Mittels einer Schicht, die auf einem, insbesondere auch als unabhängiges Element ausgebildeten, Messstreifen vorgesehen ist, kann dazu alternativ eine Möglichkeit geschaffen werden, eine Produktaufnahmevorrichtung auf einfache Weise individuell und flexibel nachzurüsten. Ein derartiger Messstreifen kann dabei außerdem optisch detektierbare Informationen wie beispielsweise eine Skalierung umfassen, die insbesondere eine wünschenswert genaue Ermittlung einer Produktmenge ermöglicht. Ein derartiger Messstreifen kann beispielsweise mittels einem mit einer Schicht mit fluoreszierenden Eigenschaften versehenen Metall- oder Kunststoffelement bereitgestellt werden.

Die vorliegende Erfindung betrifft demnach insbesondere auch eine für ein vorstehendes Verfahren geeignete Produktaufnahmevorrichtung zur Aufnahme einer Vielzahl von Produkten und/oder einer Produktmenge. Eine vorstehende erfindungsgemäße Produktaufnahmevorrichtung ist dabei für den Betrieb in einem Produktautomaten besonders geeignet.

Die vorliegende Erfindung betrifft außerdem eine Produktzähleinrichtung mit wenigstens einer UV-Lichtquelle und mit wenigstens einem optischen Sensor, der eine Filtereinrichtung umfasst, und mit einer Steuereinheit zur Ermittlung eines Produktbestands. Die UV-Lichtquelle und/oder der optische Sensor können dabei verfahrbar angeordnet sein. Die Steuereinheit kann die gesamten Abläufe der Produktzähleinrichtung steuern. Insbesondere kann mittels der Steuereinheit die UV-Lichtquelle und/oder der optische Sensor geschwenkt und/oder in eine geeignete Position gebracht werden. Die Steuereinheit ist dabei in der Lage mit der geeigneten Software weitere Auswertungen und Berechnungen durchzuführen. Die Steuereinheit umfasst außerdem einen Speicher bzw. einen Speicherbaustein, auf dem unterschiedliche Informationen gespeichert werden können.

Auf diese Weise ist die Produktzähleinrichtung geeignet ausgebildet, die Anzahl der Produkte und/oder die Produktmenge insbesondere eines Produktautomaten mit wenigstens einer erfindungsgemäßen Produktaufnahmevorrichtung zu zählen, wonach die Produktzähleinrichtung außerdem geeignet ausgebildet ist, ein vorstehendes erfindungsgemäßes Verfahren auszuführen.

Eine vorteilhafte Produktzähleinrichtung umfasst dabei insbesondere vorteilhaft eine optische Filtereinrichtung, die mittels Software bereitgestellt ist, und die einen Wellenlängenbereich kleiner dem vorbestimmten zweiten Wellenlängenbereich ausblendet.

Zur Durchführung einer individuellen Produktzählung auch unterschiedlicher Produkte kann insbesondere auf der Steuereinheit der Produktzähleinrichtung wenigstens ein Referenzbild wenigstens eines Produkts gespeichert sein. Zur Durchführung einer Produktzählung einer Vielzahl von Produkten in einer Vielzahl von Produktaufnahmevorrichtungen kann auf der Steuereinheit der Produktzähleinrichtung insbesondere vorteilhaft außerdem wenigstens ein Referenzbild wenigstens einer Produktaufnahmevorrichtung gespeichert sein.

### Ausführungsbeispiel

Ein Ausführungsbeispiel der Erfindung ist in den Zeichnungen dargestellt und wird im Folgenden näher erläutert. Figuren 3 bis 6 und 8 sind weitere Beispiele von nicht-erfindungsgemäβen Produktaufnahmevorrichtungen.

Es zeigen:
- Fig. 1a - c: jeweils schematische, erläuternde Darstellungen eines grundlegenden Gedankens einer Ausführung der Erfindung;
- Fig. 2a: jeweils unterschiedlich befüllte Produktaufnahmevorrichtungen nach einer Ausführung der Erfindung;
- Fig. 2b - d: jeweils eine Helligkeitskurve des von den Produktaufnahmevorrichtungen von Fig. 2a emittierten und entsprechend detektierten Lichts;
- Fig. 3a - b: eine jeweils unterschiedlich befüllte Produktaufnahmevorrichtung;
- Fig. 4a - b: eine jeweils unterschiedlich befüllte Produktaufnahmevorrichtung;
- Fig. 5a: eine unvollständig befüllte Produktaufnahmevorrichtung;
- Fig. 5b: eine vergrößerte Darstellung eines Elements der Produktaufnahmevorrichtung von Fig. 5a;
- Fig. 5c: eine Helligkeitskurve des von der Produktaufnahmevorrichtung von Fig. 5a emittierten und entsprechend detektierten Lichts;
- Fig. 6: eine schematische Darstellung einer Produktaufnahmevorrichtung mit auf ihr angeordneten Produkten;
- Fig. 7: eine leicht perspektivische Draufsicht auf einen Spindelhalter eines Warenautomaten mit daran angehängten Waren und
- Fig. 8: eine Draufsicht auf mehrere Warenschächte eines Warenautomaten mit darin in unterschiedlicher Anzahl gespeicherten Waren.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

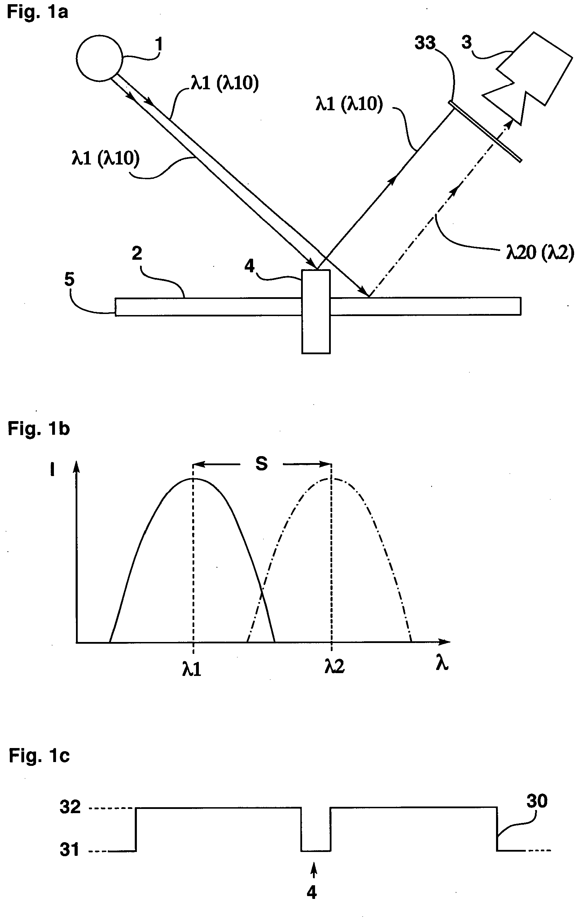

Fig. 1a zeigt eine schematische, erläuternde Darstellung eines grundlegenden Gedankens einer Ausführung der Erfindung, wonach mittels einer UV Lichtquelle 1 Licht eines vorbestimmten ersten Wellenlängenbereichs λ10 und insbesondere Licht einer Wellenlänge λ1 auf eine Produktaufnahmevorrichtung 5 ausgestrahlt wird, auf der ein Produkt 4 angeordnet ist. Die Produktaufnahmevorrichtung 5 umfasst auf Ihrer Oberfläche eine Schicht 2 mit fluoreszierenden Eigenschaften, wobei ein Teil der Schicht 2 von dem Produkt 4 verdeckt wird. Das von dem Produkt 4 reflektierte Licht liegt dabei ebenfalls in dem ersten Wellenlängenbereich λ10. Andererseits ist das von der Schicht 2 der Produktaufnahmevorrichtung 5 emittierte Licht gemäß der in Fig. 1b dargestellten Stokesschen Verschiebung zu einer Wellenlänge λ2 innerhalb eines energieärmeren Wellenlängenbereichs λ20 verschoben.

Das von dem Produkt 4 reflektierte Licht und das von der Schicht 2 emittierte Licht wird von einem optischen Sensor 3 erfasst, wobei der optische Sensor 3 eine Filtereinrichtung 33 umfasst, die Licht des ersten Wellenlängenbereichs λ10 und insbesondere der ersten Wellenlänge λ1 ausblendet. Demnach wird von dem optischen Sensor 3 lediglich von der Schicht 2 der Produktaufnahmevorrichtung 5 reflektiertes Licht des zweiten Wellenlängenbereichs λ20 detektiert und dabei ein wünschenswert hoher Kontrast zwischen Produkt 4 und Produktaufnahmevorrichtung 5 erzielt. Die Lichtquelle 1 und der optische Sensor 3 sind dabei an geeigneten Positionen oberhalb der Produktaufnahmevorrichtung 5 angeordnet.

Fig. 1c zeigt hierzu eine von einer Steuereinheit aus Bilddaten des Sensors 3 ermittelte Helligkeitskurve 30 entlang eines Profils in Längsrichtung der Produktaufnahmevorrichtung 5. Die Helligkeitskurve 30 hat einen vorteilhaft pulsförmigen Verlauf mit digitalem Charakter mit zwei ausgeprägten Helligkeitsmaxima 32, die die Schicht 2 kennzeichnen und einem Helligkeitsminimum 31, das von dem Produkt 4 verursacht wird. Anhand der Helligkeitskurve 30 kann daher die Anzahl der von der Produktaufnahmevorrichtung 5 aufgenommenen Produkte 4 ermittelt werden.

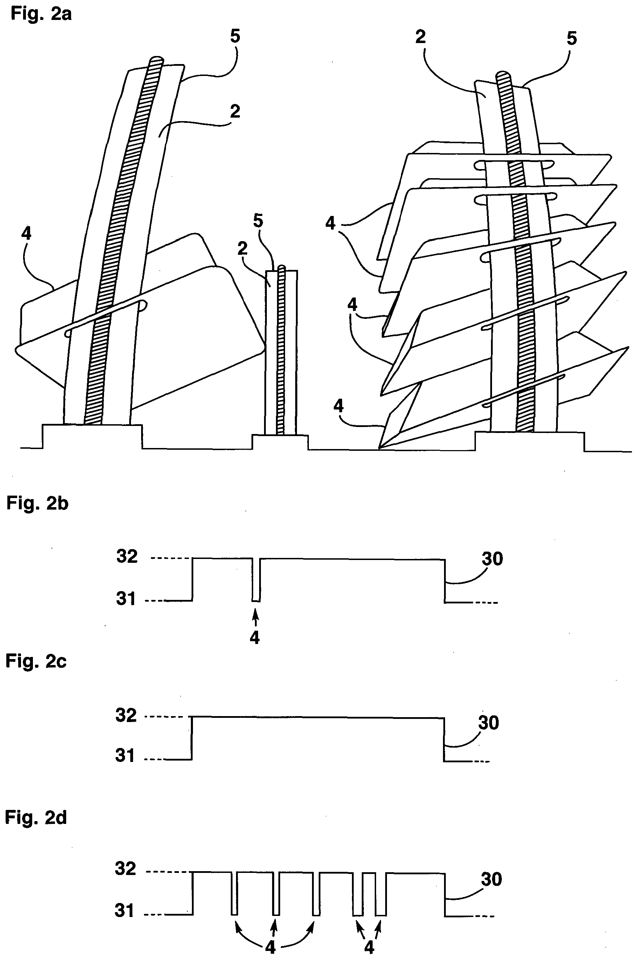

Fig. 2a zeigt drei jeweils unterschiedlich befüllte Produktaufnahmevorrichtungen 5 nach einer Ausführung der Erfindung mit einer auf ihrer Oberfläche ausgebildeten Schicht 2 mit fluoreszierenden Eigenschaften in perspektivischer Darstellung aus einer nicht ganz senkrechten Ansicht von oben.

Die Produktaufnahmevorrichtungen 5 sind jeweils als Spindelhalter ausgebildet und erstrecken sich von beispielsweise einem Produktautomaten oder einer Produktlagervorrichtung ausgehend im Wesentlichen horizontal. Die linke Produktaufnahmevorrichtung 5 trägt ein Produkt 4, und die auf gleichem Niveau ausgebildete rechte Produktaufnahmevorrichtung 5 trägt fünf Produkte 4.

Die mittige Produktaufnahmevorrichtung 5 ist leer und auf einem vergleichsweise niedrigeren Niveau angeordnet.

Die Produkte 4 sind jeweils auf übliche Weise mit gleichartigen Verpackungen versehen, die auf bekannte Weise mit den Spindelhaltern zusammenwirken.

Eine in Fig. 2a nicht dargestellte UV-Licht ausstrahlende Lichtquelle kann zu den Produktaufnahmevorrichtungen 5 von Fig. 2a an einer Position angeordnet sein, die in etwa einer vorstehend beschriebenen Position der Lichtquelle 1 von Fig. 1 entspricht, und ein, in Fig. 2a ebenfalls nicht dargestellter, geeigneter optischer Sensor kann ebenfalls an einer Position angeordnet sein, die in etwa einer vorstehend beschriebenen Position des Sensors 3 von Fig. 1 entspricht. Die Positionen der Lichtquelle 1 und des optischen Sensors 3 sind dabei geeignet, die drei Produktaufnahmevorrichtungen 5 von Fig. 2a mit den Produkten 4 mittels lediglich einer Lichtquelle 1 zu bestrahlen und mittels lediglich einem Sensor 3 zu erfassen.

Die Fig. 2b, 2c und 2d zeigen jeweils eine Helligkeitskurve 30 eines Profils des von den Produktaufnahmevorrichtungen 5 von Fig. 2a emittierten und entsprechend von dem optischen Sensor 3 detektierten Lichts in Längsrichtung der Produktaufnahmevorrichtungen 5. Die Kurven der Helligkeitsverläufe 30 der Produktaufnahmevorrichtungen 5 haben dabei alle einen vorteilhaft pulsförmigen Verlauf mit digitalem Charakter zwischen einem detektierten Maximum 32, das die Schicht 2 kennzeichnet, und Minimum 31 entsprechend der Anzahl der jeweils vorhandenen Produkte 4. Die beiden Enden der Schicht 2 der Produktaufnahmevorrichtungen 5 in Profilrichtung sind dabei ebenfalls durch ein jeweiliges Minimum 31 gekennzeichnet. Je nach Perspektive der jeweils erfassten Produkte 4 auf den Produktaufnahmevorrichtungen 5 können dabei die Minima der Produkte 4 entsprechend unterschiedliche Pulsbreiten haben und sind dabei dennoch zur Ermittlung der Anzahl der Produkte 4 geeignet.

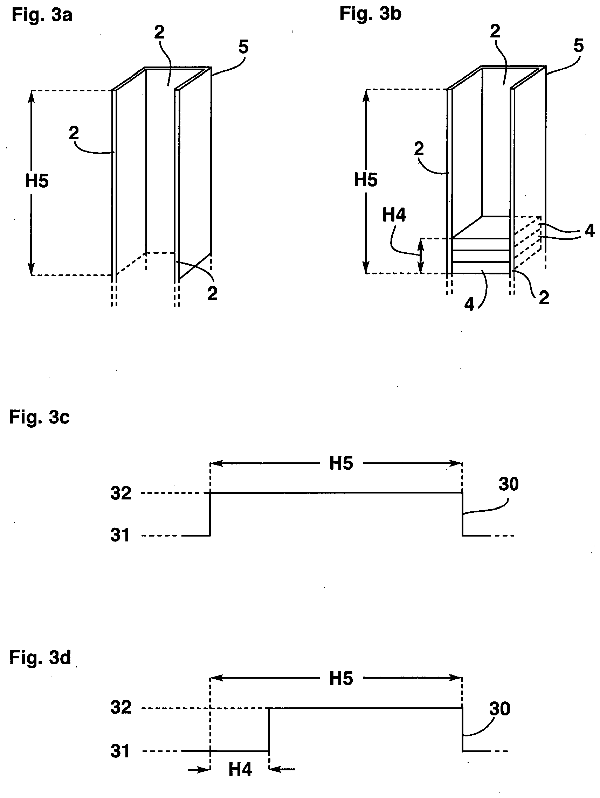

Fig. 3a zeigt eine leere Produktaufnahmevorrichtung 5 in stark schematischer perspektivischer Darstellung von schräg vorn. Die Produktaufnahmevorrichtung 5 ist als Rahmen eines Produktschachts eines Produktautomaten oder einer Produktlagervorrichtung ausgebildet.

Die Produktaufnahmevorrichtung 5 hat eine befüllbare Höhe H5 und ist nach vorne und nach oben hin offen. An die Produktaufnahmevorrichtung 5 kann sich nach unten beispielsweise eine Produktausgabevorrichtung anschließen. Die Produktaufnahmevorrichtung 5 ist außerdem an der Vorderseite ihres Rahmens und an der rückseitigen Wand ihres Rahmens innenseitig mit einer Schicht 2 mit fluoreszierenden Eigenschaften versehen.

Fig. 3b zeigt die Produktaufnahmevorrichtung 5 von Fig. 3a mit drei von ihr aufgenommenen gleichartigen Produkten 4. Die Produkte 4 haben dabei einen Füllstand H4. Außerdem verdecken die Produkte 4 entsprechend ihren Abmessungen bzw. des Füllstands H4 die innenseitige Schicht 2 auf der rückseitigen Wand.

Eine für die Anwendung des Verfahrens zur Produktbestandsermittlung geeignete Lichtquelle 1 und ein geeigneter Sensor 3 gemäß Fig. 1 kann vor dem offenen Schacht der Produktaufnahmevorrichtung 5 an jeweils geeigneten Positionen angeordnet werden, so dass mittels dem Sensor 3 das von der Schicht 2 emittierte Licht detektiert werden kann.

Fig. 3c zeigt hierzu den Helligkeitsverlauf 30 eines Profils der befüllbaren Höhe 5 des von der leeren Produktaufnahmevorrichtung 5 von Fig. 3a emittierten Lichts, der im Wesentlichen dem vorstehend beschriebenen Helligkeitsverlauf 30 von Fig. 2c entspricht, weshalb hier auf die diesbezügliche Beschreibung verwiesen wird.

Fig. 3d zeigt den Helligkeitsverlauf 30 eines Profils der befüllbaren Höhe H5 des von der Produktaufnahmevorrichtung 5 von Fig. 3b emittierten und von dem Sensor 3 detektierten Lichts mit einer entsprechend dem Füllstand H4 gegenüber dem Maximum 32 von Fig. 3c reduzierten Pulsbreite dessen Helligkeitsmaximums 32. Aus der Ermittlung der Pulsbreite des Helligkeitsmaximums 32 kann daher der Füllstand H4 der Produktaufnahmevorrichtung 5 von Fig. 3a und b bestimmt werden, und daraus dann auch die Anzahl der aufgenommenen Produkte 4 bestimmt werden.

Außerdem kann eine Vielzahl von unterschiedlichen, insbesondere auch nebeneinander angeordneten Produktaufnahmevorrichtungen 5 mittels Analyse eines Helligkeitsverlaufs eines entsprechenden Querprofils aus den jeweiligen Helligkeitsmaxima der Rahmen oder auch aus Vergleichen mit gespeicherten Referenzbildern erkannt werden.

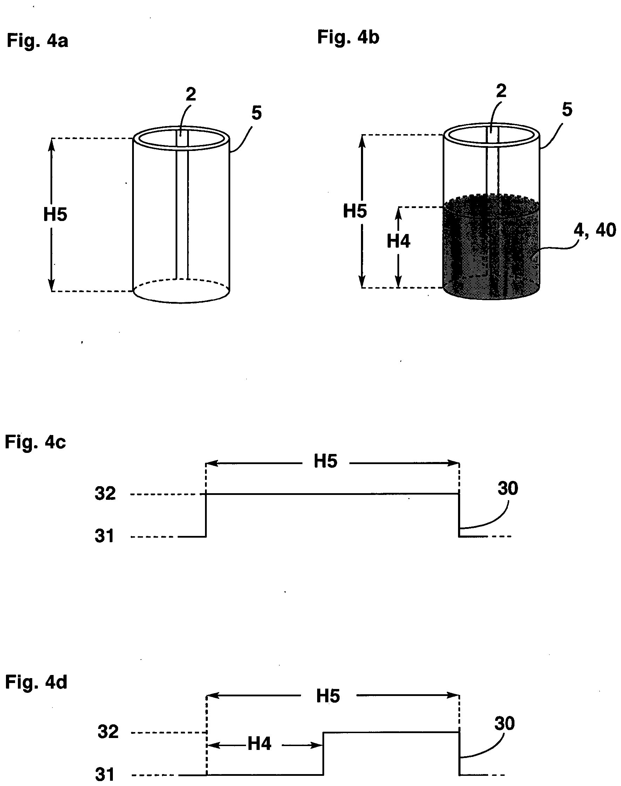

Fig. 4a zeigt eine leere Produktaufnahmevorrichtung 5 in stark schematischer perspektivischer Darstellung von schräg oben. Die Produktaufnahmevorrichtung 5 ist ein beispielsweise zylindrisches Gefäß aus einem transparenten Material und besonders geeignet, ein flüssiges Produkt 4 aufzunehmen.

Die Produktaufnahmevorrichtung 5 ist an einer Seite entlang ihrer befüllbaren Höhe H5 mit einer streifenförmigen Schicht 2 eines fluoreszierenden Materials versehen, die aufgrund der Transparenz des Gefäßes sowohl innenseitig als auch außenseitig vorgesehen sein kann.

Fig. 4b zeigt die Produktaufnahmevorrichtung 5 von Fig. 4a mit einer bis zu einem Füllstand H4 aufgenommenen Produktmenge 40 eines flüssigen Produkts 4, das die Schicht 2 entsprechend seinen optischen Eigenschaften und entsprechend seinem Füllstand H4 verdecken kann oder deren emittiertes Licht dämpfen kann, was jeweils von dem nachfolgend beschriebenen Sensor 3 erkannt wird.

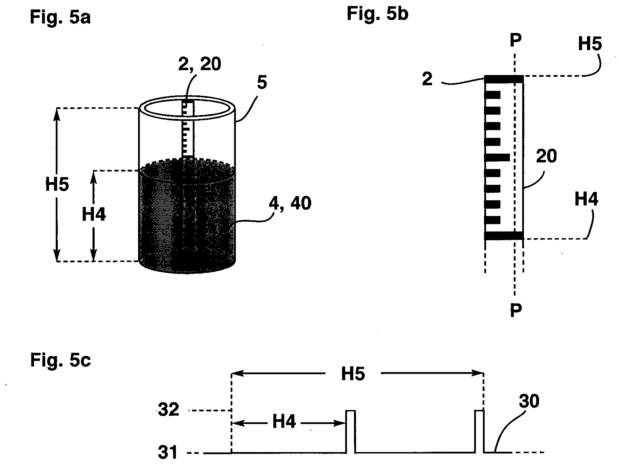

Eine für die Anwendung des Verfahrens zur Produktbestandsermittlung geeignete Lichtquelle 1 und ein geeigneter Sensor 3 gemäß Fig. 1 kann an jeweils geeigneten Positionen vor der Produktaufnahmevorrichtung 5 angeordnet werden, so dass mittels dem Sensor 3 das von der Schicht 2 emittierte Licht detektiert werden kann, was so auch für die nachfolgende anhand von Fig. 5a bis c beschriebene Produktaufnahmevorrichtung gilt.

Fig. 4c und 4d zeigen jeweils Helligkeitskurven 30 des von den Produktaufnahmevorrichtungen 5 von Fig. 4a und 4b emittierten und entsprechend detektierten Lichts, die im Wesentlichen jeweils den Helligkeitskurven 30 von Fig. 3c und 3d entsprechen, weshalb hier auf deren Beschreibung verwiesen wird.

Fig. 5a zeigt eine Produktaufnahmevorrichtung 5, die im Wesentlichen der Produktaufnahmevorrichtung 5 von Fig. 4a und 4b entspricht, weshalb hier auf deren Beschreibung verwiesen wird.

Die Produktaufnahmevorrichtung 5 von Fig. 5a ist wie die Produktaufnahmevorrichtungen 5 von Fig. 4b bis zu einem Füllstand H4 mit einer Produktmenge 40 eines Produkts 4 befüllt. Die streifenförmige Schicht 2 entlang der befüllbaren Höhe H5 der Produktaufnahmevorrichtung 5 von Fig. 5a umfasst im Unterschied zu Fig. 4a einen Messstreifen 20 auf der eine Skalierung aus fluoreszierendem Material vorgesehen sein kann.

Fig. 5b zeigt hierzu eine vergrößerte Darstellung des in Fig. 5a freiliegenden Messstreifens 20 mit seiner als Skalierung aufgetragenen Schicht 2. Mittels der vorteilhaften Skalierung kann ein Füllstand H4 der befüllbaren Höhe H5 besonders genau detektiert werden.

Fig. 5c zeigt hierzu eine Helligkeitskurve 30 eines Profils entlang der Linie P-P von Fig. 5b des von der Produktaufnahmevorrichtung 5 von Fig. 5a emittierten und entsprechend detektierten Lichts, mit zwei Helligkeitsmaxima 32, die von dem Profil P erfasst werden.

Sowohl der Messstreifen 20 von Fig. 5a und 5b als auch die korrespondierende streifenförmige Schicht 2 der Ausführung von Fig. 4a und 4b können dabei direkt auf der jeweiligen Produktaufnahmevorrichtung 5 vorgesehen sein, als auch als unabhängiges Element ausgebildet sein. Zum Beispiel können Sie etwa als ein entsprechend beschichtetes Metall- oder Kunststoffelement ausgebildet sein, mit dem auf einfache Weise die Produktaufnahmevorrichtung 5 gemäß Fig. 5a und 4a und 4b aber auch gemäß Fig. 3a und 3b ausgestattet werden können.

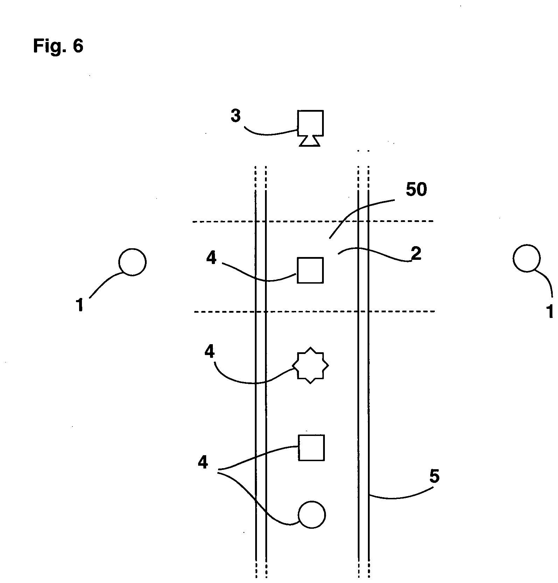

Fig. 6 zeigt eine schematische Darstellung einer Produktaufnahmevorrichtung 5 mit auf ihr angeordneten Produkten 4, wobei die Produktaufnahmevorrichtung 5 ein Förderband beispielsweise eines Produktlagers ist. An geeigneten Positionen oberhalb der Produktaufnahmevorrichtung 5 sind einander seitlich der Produktaufnahmevorrichtung 5 gegenüberliegend angeordnete Lichtquellen 1 gemäß Fig. 1 angeordnet, die einen Detektierbereich 50 unter Vermeidung von unerwünschten Schattenwürfen besonders gut bestrahlen/ausleuchten. Oberhalb des Detektierbereichs 50 ist ein mit einer Filtereinrichtung versehener optischer Sensor 3 gemäß Fig. 1 angeordnet. Auf die entsprechende Zeichnung der Filtereinrichtung wurde hier verzichtet.

Die Produkte 4 verdecken die fluoreszierende Schicht auf der Oberfläche der Produktaufnahmevorrichtung 5 und werden von dem Sensor 3 als dunkler Grundriss erkannt. Mittels gespeicherter Referenzbilder der Produkte 4 lassen sich die erkannten Produkte 4 zuordnen und mittels einer geeigneter Softwareroutine zählen.

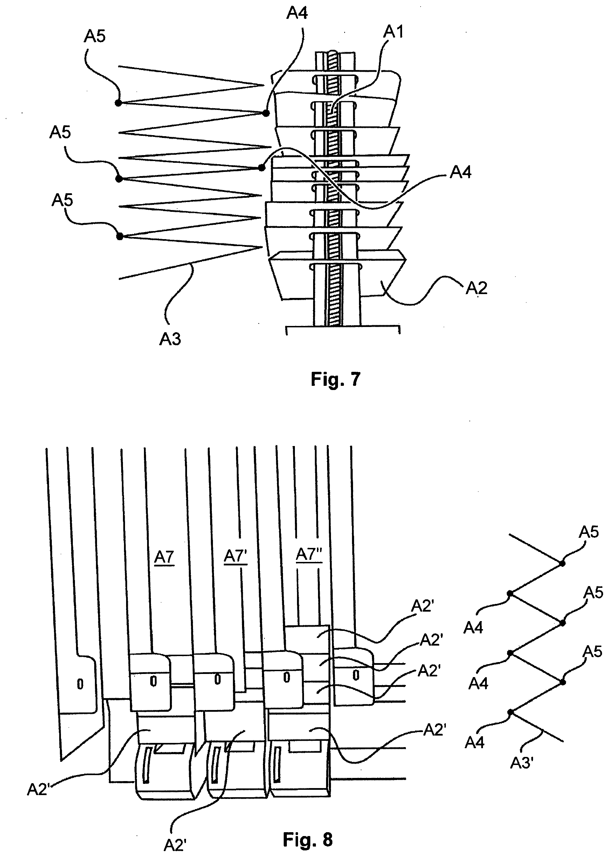

Die Figur 7 zeigt eine Draufsicht auf einen Spindelhalter A1, wie er in den erfindungsgemäßen Warenautomaten (nicht gezeigt) eingesetzt werden kann. An den Spindelhalter A1 sind mehrere Waren A2 angehängt. Bei den Waren A2 handelt es sich um Rasierklingen, deren Verpackung eine so genannte Euroslot-Ausnehmung aufweist.

Ein optischer Sensor, in diesem Fall eine Kamera (nicht gezeigt), ist oberhalb der Spindelstange A1 angeordnet und nimmt Bilddaten aus der gezeigten Perspektive auf. Zur Veranschaulichung ist links neben der Spindelstange A1 eine Helligkeitskurve A3 dargestellt, die aus den Bilddaten der Kamera von der Steuereinheit errechnet wurde. Aus den Helligkeitsmaxima A4 kann man auf Lücken zwischen zwei Waren schließen. Die Helligkeitsminima A5 können den Waren A2 zugeordnet werden. Anhand der Helligkeitskurve A3 kann also auf die Anzahl der auf der Spindelstange A1 angehängten Waren A2 ermittelt werden.

In Figur 8 sind mehrere Warenschächte A7 eines Warenautomaten (nicht gezeigt) dargestellt. In den einzelnen Warenschächten A7, A7', A7" sind Waren A2' in unterschiedlicher Anzahl gespeichert. Bei den Waren A2' handelt es sich in diesem Fall um Zigarettenschachteln. Von der Kamera können gleichzeitig Bilddaten von mehreren Warenschächten aufgenommen werden. Rechts neben den Warenschächten A7, A7', A7" ist eine schematische Helligkeitskurve A3' des ersten Warenschachts A7' gezeigt. Aus der Anzahl der Helligkeitsminima A5 kann die Anzahl der Waren A2' ermittelt werden. Die Steuereinheit kann aus den Bilddaten gleichzeitig mehrere Helligkeitskurven A3' berechnen und diese den jeweiligen Warenschächten A7, A7', A7" zuordnen. Aus den jeweiligen Helligkeitskurven A3' kann dann wieder jeweils die Anzahl der Waren A2' im jeweiligen Warenschacht A7, A7', A7" ermittelt werden.

### Bezugszeichenliste

- 1: Lichtquelle
- 2: Schicht
- 20: Messstreifen

- 3: Optischer Sensor
- 30: Helligkeitsverlauf, Helligkeitskurve
- 31: Minimum
- 32: Maximum
- 33: Filter

- 4: Produkt
- 40: Produktmenge

- 5: Produktaufnahmevorrichtung
- 50: Detektierbereich

- A1: Spindelhalter
- A2: Ware
- A3: Helligkeitskurve
- A4: Helligkeitsmaxima
- A5: Helligkeitsminima

- A7: Warenschacht

- I: Intensität
- S: Stokes Verschiebung
- P: Profil
- H5: Befüllbare Höhe
- H4: Füllstand

- λ10, λ20: Wellenlängenbereich
- λ, λ1, λ2: Wellenlänge

## Patentansprüche

1. Verfahren zum Betreiben eines Warenautomaten mit zumindest einer als Spindelstange ausgebildeten Warenspeichereinheit (A1, 5), in welcher eine Vielzahl einzelner Waren (A2, 4) gespeichert sind, wobei der Warenautomat eine Steuereinheit und zumindest einen optischen Sensor aufweist,
- wobei der optische Sensor Bilddaten der zumindest einen Warenspeichereinheit (A1, 5) und der darin befindlichen Vielzahl einzelner Waren (A2, 4) aufzeichnet,
- wobei aus den Bilddaten einer Warenspeichereinheit (A1, 5) des optischen Sensors jeweils eine Helligkeitskurve (A3, 30) mit Helligkeitsminima (A5, 31) und Helligkeitsmaxima (A4, 32) von der Steuereinheit errechnet wird,
- wobei die Steuereinheit aus der Anzahl der Helligkeitsminima (A5, 31) einer Helligkeitskurve (A3, 30) die Anzahl der Waren (A2, 4) ermittelt, die sich in einer Warenspeichereinheit (A1, 5) befinden,
- und wobei die Steuereinheit aus den Helligkeitsmaxima (A4, 32) Freiräume zwischen den einzelnen Waren (A2, 4) identifiziert,
und wobei
zumindest eine Lichtquelle (1) verwendet wird, die UV-Licht mit einer vorbestimmten ersten Wellenlänge (λ1) eines vorbestimmten ersten Wellenlängenbereichs (λ10) ausstrahlt, und wobei die Warenspeichereinheit (A1, 5) eine Schicht (2) mit fluoreszierenden Eigenschaften umfasst, die Licht mit einer vorbestimmten zweiten Wellenlänge (λ2) innerhalb eines vorbestimmten zweiten Wellenlängenbereichs (λ20) emittiert, und wobei
für den optischen Sensor eine Filtereinrichtung (33) verwendet wird, mittels der ausschließlich Licht des vorbestimmten zweiten Wellenlängenbereichs (λ20) von dem Sensor erfasst wird, und wobei
der optische Sensor Bilddaten eines Profils in Längsrichtung der zumindest einen Warenspeichereinheit (A1, 5) und der darin befindlichen Waren (A2, 4) aufzeichnet, und wobei die von der Steuereinheit errechneten Helligkeitskurven (A3, 30) einen pulsförmigem Verlauf mit digitalem Charakter aufweisen.

2. Verfahren zum Betreiben eines Warenautomaten nach Anspruch 1,
**wobei** der Warenautomat mehrere Warenspeichereinheiten (A1, 5) aufweist, und
**wobei** die Steuereinheit aus den Bilddaten des optischen Sensors die Anzahl der Warenspeichereinheiten (A1, 5) und die Anzahl der jeweils darin befindlichen Waren (A2, 4) ermittelt.

3. Verfahren zum Betreiben eines Warenautomaten nach Anspruch 1 oder 2, **wobei**
auf der zumindest einen als Spindelstange ausgebildeten Warenspeichereinheit (A1, 5) jeweils die Vielzahl von Waren (A2, 4) aufgehängt sind.

4. Verfahren zum Betreiben eines Warenautomaten nach einem der Ansprürche 1 bis 3, **wobei**
der zweite Wellenlängenbereich (λ20) energieärmer als der erste Wellenlängenbereich (λ10) ist.

5. Verfahren zum Betreiben eines Warenautomaten nach einem der Ansprüche 1 bis 4, **wobei**
der von dem optischen Sensor erfasste zweite Wellenlängenbereich (λ20) Licht mit einer Wellenlänge von größer als 600nm umfasst.

6. Verfahren zum Betreiben eines Warenautomaten nach einem der Ansprüche 1 bis 5, **wobei**
die Lichtquelle (1) im wesentlichen Licht einer vorbestimmten ersten diskreten Wellenlänge (λ1) des ersten Wellenlängenbereichs (λ10) ausstrahlt; und wobei die vorbestimmte erste Wellenlänge (λ1) zwischen 350nm und 400nm liegt und insbesondere bei etwa 375nm liegt.

7. Warenautomat mit zumindest einer als Spindelstange ausgebildeten Warenspeichereinheit (A1, 5), einer Steuereinheit mit einem Speicherbaustein, einem optischen Sensor zur Erfassung von Bilddaten von einer in der Warenspeichereinheit (A1, 5) befindlicher Vielzahl von Waren (A2, 4), und mit wenigstens einer Lichtquelle (1), die UV-Licht mit einer vorbestimmten ersten Wellenlänge (λ1) innerhalb eines vorbestimmten ersten Wellenlängenbereichs (λ10) auf die Warenspeichereinheit (A1, 5) ausstrahlt, wobei die Warenspeichereinheit (A1,5) eine Schicht (2) mit fluoreszierenden Eigenschaften aufweist, die Licht mit einer vorbestimmten zweiten Wellenlänge (λ2) innerhalb eines vorbestimmten zweiten energieärmeren Wellenlängenbereichs (λ20) emittiert; und mit einer Filtereinrichtung (33), die derart eingerichtet ist, dass von dem optische Sensor ausschließlich Licht des zweiten Wellenlängenbereichs (λ20) erfasst wird. wobei die Steuereinheit mittels einer geeigneten Softwareroutine eingerichtet ist, die Anzahl der Waren (A2, 4) zu ermitteln, und wobei der Warenautomat geeignet eingerichtet ist, ein Verfahren nach einem der Ansprüche 1 bis 6 auszuführen.

8. Warenautomat nach Anspruch 7,
**wobei**
die als Spindelstange ausgebildete Warenspeichereinheit (A1, 5) zur Aufhängung der Vielzahl von Waren auf der Warenspeichereinheit (A1, 5) ausgebildet ist.

9. Warenautomat nach Anspruch 7 oder 8,
**wobei**
die Lichtquelle (1) eine schmalbandige Lichtquelle ist.

10. Warenautomat nach Anspruch 7, 8 oder 9,
**wobei**
die Filtereinrichtung (33) mittels Software bereitgestellt ist, die einen Wellenlängenbereich kleiner dem vorbestimmten zweiten Wellenlängenbereich (λ20) ausblendet.

## Claims

1. Method for operating a vending machine with at least one article storage unit (A1, 5) configured as a lead screw, in which a plurality of individual articles (A2, 4) are stored, wherein the vending machine comprises a control unit and at least one optical sensor,
- wherein the optical sensor records image data of the at least one article storage unit (A1, 5) and of the plurality of individual articles (A2, 4) located therein,
- wherein a brightness curve (A3, 30) with brightness minima (A5, 31) and brightness maxima (A4, 32) is respectively calculated by the control unit from the image data of an article storage unit (A1, 5) of the optical sensor,
- wherein the control unit determines the number of articles (A2, 4) located in an article storage unit (A1, 5) from the number of brightness minima (A5, 31) of a brightness curve (A3, 30),
- and wherein the control unit identifies gaps between the individual articles (A2, 4) from the brightness maxima (A4, 32),
and wherein
at least one light source (1) is used, which emits UV light with a predetermined first wavelength (λ1) of a predetermined first wavelength range (λ10), and wherein
the article storage unit (A1, 5) comprises a layer (2) with fluorescent properties which emits light with a predetermined second wavelength (λ2) within a predetermined second wavelength range (λ20), and wherein
a filter device (33) is used for the optical sensor, by means of which only light of the predetermined second wavelength range (λ20) is captured by the sensor, and wherein
the optical sensor records image data of a profile in the longitudinal direction of the at least one article storage unit (A1, 5) and of the articles (A2, 4) located therein, and wherein
the brightness curves (A3, 30) calculated by the control unit exhibit a pulse-shaped progression with a digital character.

2. The method for operating a vending machine according to claim 1,
**wherein** the vending machine comprises a plurality of article storage units (A1, 5), and
**wherein** the control unit determines the number of article storage units (A1, 5) and the number of articles (A2, 4) respectively located in the same from the image data of the optical sensor.

3. The method for operating a vending machine according to claim 1 or 2,
**wherein**
the plurality of articles (A2, 4) are respectively suspended on the at least one article storage unit (A1, 5) configured as a lead screw.

4. The method for operating a vending machine according to one of claims 1 to 3, **wherein**
the second wavelength range (λ20) carries less energy than the first wavelength range (λ10).

5. The method for operating a vending machine according to one of claims 1 to 4, **wherein**
the second wavelength range (λ20) captured by the optical sensor comprises light with a wavelength greater than 600nm.

6. The method for operating a vending machine according to one of claims 1 to 5, **wherein**
the light source (1) substantially emits light of a predetermined first discrete wavelength (λ1) of the first wavelength range (λ10); and wherein the predetermined first wavelength (λ1) is between 350nm and 400nm and is in particular approximately 375nm.

7. Vending machine with at least one article storage unit (A1, 5) configured as a lead screw, a control unit with a memory component, an optical sensor for capturing image data of a plurality of articles (A2, 4) located in the article storage unit (A1, 5), and at least one light source (1) which emits UV light with a predetermined first wavelength (λ1) within a predetermined first wavelength range (λ10) onto the article storage unit (A1, 5), wherein
the article storage unit (A1, 5) comprises a layer (2) with fluorescent properties which emits light with a predetermined second wavelength (λ2) within a predetermined second lower-energy wavelength range (λ20); and with a filter device (33) which is configured so that only light of the second wavelength range (λ20) is captured by the optical sensor, wherein the control unit is configured by means of a suitable software routine to determine the number of articles (A2, 4), and wherein the vending machine is appropriately configured to execute a method according to one of claims 1 to 6.

8. The vending machine according to claim 7,
**wherein**
the article storage unit (A1, 5) configured as a lead screw is configured for the suspension of the plurality of articles on the article storage unit (A1, 5).

9. The vending machine according to claim 7 or 8,
**wherein**
the light source (1) is a narrow-band light source.

10. The vending machine according to claim 7, 8 or 9,
**wherein**
the filter device (33) is provided by means of software which blocks a wavelength range smaller than the predetermined second wavelength range (λ20).

## Revendications

1. Procédé pour faire fonctionner un distributeur automatique de marchandises avec au moins une unité de stockage de marchandises (A1, 5) conçue en forme de tige de broche, dans laquelle une pluralité de marchandises individuelles (A2, 4) sont stockées, tandis que le distributeur automatique de marchandises présente une unité de commande et au moins un capteur optique,
- tandis que le capteur optique enregistre des données images de l'au moins une unité de stockage de marchandises (A1, 5) et de la pluralité de marchandises individuelles (A2, 4) qui s'y trouve,
- tandis qu'à partir des données images d'une unité de stockage de marchandises (A1, 5) du capteur optique, respectivement une courbe de luminosité (A3, 30) avec des minima de luminosité (A5, 31) et des maxima de luminosité (A4, 32) est calculée par l'unité de commande,
- tandis que l'unité de commande détermine, à partir du nombre de minima de luminosité (A5, 31) d'une courbe de luminosité (A3, 30), le nombre de marchandises (A2, 4) qui se trouvent dans une unité de stockage de marchandises (A1, 5),
- et tandis que l'unité de commande identifie, à partir des maxima de luminosité (A4, 32), des espaces libres entre les différentes marchandises (A2, 4),
et tandis que
au moins une source de lumière (1) est utilisée, laquelle émet de la lumière UV avec une première longueur d'onde prédéterminée (λ1) d'un premier intervalle de longueur d'onde prédéterminé (λ10), et tandis que l'unité de stockage de marchandises (A1, 5) comprend une couche (2) présentant des caractéristiques fluorescentes, qui émet de la lumière avec une seconde longueur d'onde prédéterminée (λ2) à l'intérieur d'un second intervalle de longueur d'onde prédéterminé (λ20), et tandis que est utilisé pour le capteur optique un dispositif de filtrage (33) au moyen duquel seule la lumière du deuxième intervalle de longueur d'onde prédéterminé (λ20) est détectée par le capteur, et tandis que le capteur optique enregistre des données images d'un profil dans le sens de la longueur de la au moins une unité de stockage de marchandises (A1, 5) et des marchandises (A2, 4) qui s'y trouvent, et tandis que les courbes de luminosité (A3, 30) calculées par l'unité de commande présentent une courbe en forme d'impulsion à caractère numérique.

2. Procédé pour faire fonctionner un distributeur automatique de marchandises selon la revendication 1,
**tandis que** le distributeur automatique de marchandises présente plusieurs unités de stockage de marchandises (A1, 5), et
**tandis que** l'unité de commande détermine, à partir des données images du capteur optique, le nombre d'unités de stockage de marchandises (A1, 5) et le nombre de marchandises (A2, 4) qui y sont stockées respectivement.

3. Procédé pour faire fonctionner un distributeur automatique de marchandises selon la revendication 1 ou 2, **tandis que**
la pluralité de marchandises (A2, 4) est respectivement suspendue sur l'au moins une unité de stockage de marchandises (A1, 5) conçue sous forme de tige de broche.

4. Procédé pour faire fonctionner un distributeur automatique de marchandises selon l'une des revendications 1 à 3, **tandis que**
le deuxième intervalle de longueur d'onde (λ20) est plus faible en énergie que le premier intervalle de longueur d'onde (λ10).

5. Procédé pour faire fonctionner un distributeur automatique de marchandises selon une des revendications 1 à 4, **tandis que**
le deuxième intervalle de longueur d'onde (λ20) détecté par le capteur optique comprend de la lumière ayant une longueur d'onde supérieure à 600 nm.

6. Procédé pour faire fonctionner un distributeur automatique de marchandises selon une des revendications 1 à 5, **tandis que**
la source de lumière (1) émet essentiellement de la lumière d'une première longueur d'onde discrète prédéterminée (λ1) du premier intervalle de longueur d'onde (λ10), et tandis que la première longueur d'onde prédéterminée (λ1) est comprise entre 350 nm et 400 nm et est, plus particulièrement, d'environ 375 nm.

7. Distributeur automatique de marchandises comprenant au moins une unité de stockage de marchandises (A1, 5) conçue sous forme de tige de broche, une unité de commande avec un module de mémoire, un capteur optique pour la saisie de données images d'une pluralité de marchandises (A2, 4) se trouvant dans l'une des unités de stockage de marchandises (A1, 5), et comprenant au moins une source lumineuse (1) qui émet de la lumière UV avec une première longueur d'onde prédéterminée (λ1) à l'intérieur d'un premier intervalle de longueur d'onde prédéterminé (λ10) sur l'unité de stockage de marchandises (A1, 5), tandis que
l'unité de stockage de marchandises (A1, 5) présente une couche (2) avec des caractéristiques fluorescentes qui émet de la lumière avec un deuxième intervalle de longueur d'onde prédéterminé (λ2) à l'intérieur d'un deuxième intervalle de longueur d'onde prédéterminé (λ20) faible en énergie, et avec un dispositif de filtrage (33) qui est agencé de telle sorte que seule de la lumière du deuxième intervalle de longueur d'onde (λ20) est captée par le capteur optique, tandis que l'unité de commande est agencée au moyen d'une routine logicielle apte à déterminer le nombre de marchandises (A2, 4), et tandis que le distributeur automatique de marchandises est agencé de manière à pouvoir exécuter un procédé selon une des revendications 1 à 6.

8. Distributeur automatique de marchandises selon la revendication 7 **tandis que**
l'unité de stockage de marchandises (A1, 5) conçue sous forme de tige de broche est conçue pour suspendre la pluralité de marchandises sur l'unité de stockage de marchandises (A1, 5).

9. Distributeur automatique de marchandises selon la revendication 7 ou 8 **tandis que**
la source de lumière (1) est une source de lumière à bande étroite.

10. Distributeur automatique d'articles selon la revendication 7, 8 ou 9 **tandis que**
le dispositif de filtrage (33) est fourni au moyen d'un logiciel qui masque un intervalle de longueur d'onde inférieur au deuxième intervalle de longueur d'onde prédéterminé (λ20).
